# EUROPÄISCHE PATENTANMELDUNG

(11) **EP 2 070 771 A1**
(43) Veröffentlichungstag der Anmeldung: **17.06.2009**
(21) Anmeldenummer: 07024222.7
(22) Anmeldetag: 13.12.2007
(51) Int. Cl.: B60R 13/08, B32B 15/00, F01N 7/14, F02B 77/11, F16L 59/02, F16L 59/08, G10K 11/168

(54) **Hitzeschild**

(71) Anmelder: REINZ-Dichtungs-GmbH, 89233 Neu-Ulm (DE)
(72) Erfinder: Ostermeier, Helmut, 89349 Burtenbach (DE); Sauter, Marc, 89264 Biberachzell (DE)
(74) Vertreter: Tomerius, Isabel

(57) **Zusammenfassung**

Die Erfindung betrifft ein Hitzeschild (1) zum Abschirmen eines Gegenstandes gegen Hitze und/oder Schall mit zwei Metalllagen (3) und mit einer zumindest abschnittsweise zwischen den zwei Metalllagen angeordneten nicht-metallischen Isolationsschicht (4). Zwischen den zwei Metalllagen ist wenigstens ein metallischer Verstärkungseinsatz (5f) angeordnet, der eine wesentlich geringere Ausdehnung aufweist als die zwei Metalllagen.

## Beschreibung

Die Erfindung betrifft einen Hitzeschild zum Abschirmen eines Gegenstandes gegen Hitze und/oder Schall mit zwei Metalllagen und mit einer zumindest abschnittsweise zwischen den zwei Metalllagen angeordneten nicht-metallischen Isolationsschicht. Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz.

Üblicherweise weisen derartige Hitzeschilde zwei metallische Außenlagen auf, zwischen denen eine Isolationsschicht angeordnet ist, über die die hitze- und schallabsorbierenden Effekte des Hitzeschildes im Wesentlichen erreicht werden. Diese Isolationsschicht besteht beispielsweise aus Glimmer oder Vermiculit, temperaturbeständiger Pappe, anorganischen oder organischen Faserverbundmaterialien oder anderen geeigneten Dämmstoffen, wie beispielsweise Geweben, Gewirken und/oder Gestricken aus temperaturbeständigen Fasern. Daneben sind Hitzeschilde bekannt, die keine nicht-metallische Isolationsschicht umfassen. Bei diesen Hitzeschilden kann zumindest eine der Metalllagen perforiert sein, so dass zwischen ihnen ein Resonanzraum gebildet wird, in dem Schall absorbiert werden kann. Gleichzeitig dient die zwischen den Metalllagen eingeschlossene Luftschicht als Isolationsschicht gegen Hitze. Alternativ können die Metalllagen durchgehend oder an ihren Oberflächen strukturiert sein. Typische Verformungsmuster der Metalllagen werden beispielsweise durch Noppen oder Rippen in einer der beiden Metalllagen erhalten, die in Richtung auf die jeweilige andere Metallschicht vorstehen.

Bei der Herstellung des Hitzeschildes wird üblicherweise von einer planen und flächigen Metalllage ausgegangen, auf die die Isolationsschicht aufgebracht wird. Anschließend wird die zweite flächige und plane Metalllage auf die Isolationsschicht aufgelegt. Dieses sandwichartig aufgebaute Paket weist somit zu seinen beiden Außenseiten jeweils eine plane Metalllage auf. Anschließend erfolgt üblicherweise mindestens ein Biege- und/oder Prägeschritt, in dem das Sandwich-Paket in eine dreidimensionale Endstruktur verformt wird.

Diese zum Teil stark dreidimensional verformte Endstruktur ist häufig gewünscht, um den Hitzeschild möglichst genau an die Außenkontur des abzuschirmenden Bauteils anzupassen und so den für den Einbau eines Hitzeschilds in ein Kraftfahrzeug benötigten Platzbedarf gering zu halten. Allerdings haben diese dreidimensional verformten Bereiche häufig Spannungen im Hitzeschild zur Folge. Diese Spannungen im Hitzeschild führen nämlich regelmäßig zu einer Rissbildung, beispielsweise aufgrund betriebsbedingter Vibrationen. Eine Rissbildung ist insofern nachteilig, als dass auch kleinste Risse ein Weiterreißen bei weiterer Vibrations-Exposition nach sich ziehen und auf Dauer damit die hitze- und/oder schallabsorbierenden Eigenschaften des Hitzeschildes nicht mehr gewährleistet sind. Diese Rissproblematik tritt insbesondere dann besonders drastisch hervor, wenn die Hitzeschilde vergleichsweise dünn ausgebildet sind. Gerade dies ist aber häufig erwünscht, um beispielsweise Material und Gewicht einsparen zu können.

Die Verwendung entsprechend dünner Ausgangsmaterialien führt zudem bereits im Herstellungsprozess der Hitzeschilde, in dem beispielsweise die dreidimensionale Verformung durch Biege- und Prägeverfahren aus einer ebenen Grundform heraus erreicht wird, zu einem häufigen Auftreten von Rissen oder ähnlichen Beschädigungen. Derartige minderwertige Hitzeschilde müssen aussortiert werden, sodass bisher, insbesondere bei der Herstellung vergleichsweise stark dreidimensional verformter dünner Hitzeschilde, ein entsprechend hoher Anteil an Ausschuss anfällt. Noch schwerwiegender als die Ausschlussproblematik ist aber unkontrolliertes Reißen im Betrieb, was, so es nicht rechtzeitig erkannt wird, zu Schädigung der eigentlich zu schützenden benachbarten Bauteile führt und auf jeden Fall einen aufwändigen und kostenintensiven Austausch zur Folge hat.

**Aufgabe** der Erfindung ist es somit, einen Hitzeschild anzugeben, der dünne und/oder stark dreidimensional verformte Metalllagen aufweisen kann und gleichzeitig eine verminderte Rissbildung im Herstellungsprozess und im Gebrauchseinsatz aufweist.

Die Lösung dieser Aufgabe gelingt mit dem Hitzeschild gemäß Anspruch 1. Bevorzugte Weiterbildungen sind in den Unteransprüchen beschrieben.

Für einen gattungsgemäßen Hitzeschild zum Abschirmen eines Gegenstandes gegen Hitze- und/oder Schall mit zwei Metalllagen und mit einer zumindest abschnittsweise zwischen den zwei Metalllagen angeordneten nicht-metallischen Isolationsschicht (im Folgenden allein als "Isolationsschicht" bezeichnet) gelingt die Lösung der Aufgabe dadurch, dass wenigstens ein metallischer Verstärkungseinsatz (im Folgenden allein als "Verstärkungseinsatz" bezeichnet) zwischen den zwei Metalllagen angeordnet ist, wobei der wenigstens eine Verstärkungseinsatz eine wesentlich geringere Ausdehnung aufweist als die zwei Metalllagen im fertigen Hitzeschild. Unter Ausdehnung ist in diesem Zusammenhang die räumliche Ersteckung jeder der beiden Metalllagen - also jeder der Metalllagen für sich genommen - bzw. des Verstärkungseinsatzes zu verstehen. Bei den üblicherweise flächig ausgebildeten Hitzeschilden entspricht die Ausdehnung einer Metalllage somit ihrer Außenoberfläche im fertigen Hitzeschild. Im Falle der Befestigung der beiden Metalllagen aneinander durch Umfalzen des Randbereiches der einen um den Außenrand der anderen Metalllage wird in der ausgedehnteren der beiden Lagen der umgefalzte Randbereich nicht berücksichtigt, sondern nur die zur Außenseite dieser Metalllage hin liegende Oberfläche, nicht aber der auf der anderen Seite des Hitzeschildes liegende umgefalzte Randabschnitt. Im Inneren der Metalllage befindliche, vollständig eingeschlossene Öffnungen werden der Ausdehnung der Metalllage hinzugerechnet. Die Ausdehnung des Verstärkungseinsatzes wird in entsprechender Weise durch seine größte Oberfläche zu einer Seite hin angegeben. Auch hier werden eventuell im Inneren des Verstärkungseinsatzes vorhandene Öffnungen in der Ausdehnung des Verstärkungseinsatzes berücksichtigt.

Im Rahmen der Erfindung ist die Ausdehnung des Verstärkungseinsatzes dann wesentlich geringer als die jeder der zwei Metalllagen, wenn die Ausdehnung des Verstärkungseinsatzes kleiner als 25 %, insbesondere kleiner als 15 % und besonders geringer als 10 % der Ausdehnung einer jeden der zwei Metalllagen ist. Im Verhältnis zu den zwei Metalllagen handelt es sich bei dem metallischen Verstärkungseinsatz somit nicht um eine dritte metallische Lage, die im Wesentlichen im gesamten Hitzeschild zwischen den zwei Metalllagen verläuft, sondern um ein wesentlich kleineres Bauteil, welches vorzugsweise gezielt in Bereichen, in denen erfahrungsgemäß mit hoher Wahrscheinlichkeit eine Rissbildung in wenigstens einer der zwei Metalllagen beobachtet werden kann, zwischen den zwei Metalllagen im Hitzeschild angeordnet ist. Ein wesentliches Merkmal der Erfindung liegt somit darin, dass der Verstärkungseinsatz erheblich kleiner ausgebildet ist als jede der beiden Metalllagen. Sind mehrere Verstärkungseinsätze im Hitzeschild vorhanden, weist die Summe der Ausdehnungen aller Verstärkungseinsätze maximal 30 % der Ausdehnung auf. Grundsätzlich wird die Größe der Verstärkungseinsätze auf die Bereiche beschränkt bleiben, die tatsächlich der Verstärkung bedürfen, um eine unnötige Gewichtszunahme zu vermeiden.

Der erfindungsgemäße Verstärkungseinsatz dient dazu, Bereiche im Hitzeschild zu stabilisieren, in denen typischerweise die vorstehend beschriebene Rissbildung auftreten kann. Dazu ist der Verstärkungseinsatz zweckmäßigerweise im Wesentlichen insbesondere in den Bereichen zwischen den zwei Metalllagen angeordnet, die insbesondere unter Schwingungsanregung im Betriebseinsatz des Hitzeschildes zum Auftreten der vorstehend dargelegten Probleme neigen. Dies sind insbesondere Stellen am Hitzeschild, die stärkere Spannungsgradienten beinhalten und/oder Mittel zur Befestigung, wie beispielsweise eine Befestigungsausnehmung in Form eines Loches etc, aufweisen, da sich an diesen Stellen die unterschiedlichen Materialspannungen besonders stark auswirken bzw. im Betriebseinsatz üblicherweise hier eine Vibrationsübertragung auf den Hitzeschild erfolgt. Konkret wird der Verstärkungseinsatz zur Stabilisierung dieser Bereiche zwischen die beiden die Außenoberflächen des Hitzeschildes bildenden Metalllagen eingebracht. Auf diese Weise bleibt die nach außen tretende Grundform des Hitzeschildes bei der Verwendung eines erfindungsgemäßen Verstärkungseinsatzes unverändert, so dass sich die Erfindung ohne weitere formbedingte Anpassungsmaßnahmen auf bereits verbreitete Hitzeschilde übertragen lässt.

Die zwei Metalllagen des Hitzeschilds können aus jedem bislang für Hitzeschilde üblichen Material bestehen. Bevorzugt besteht der Verstärkungseinsatz aus demselben metallischen Material, jedoch ist dies nicht zwingend. Geeignete Materialien sind beispielsweise Stahl, aluminiumplattierter Stahl oder Aluminium(-Legierungen). Ferner ist feueraluminierter Stahl besonders weit verbreitet und geeignet. Edelstähle werden für Einsatzgebiete mit Korrosionsrisiko und höherer Temperaturbelastung bevorzugt, nickelreiche Stähle für Hochtemperaturanwendungen. Aluminiumplattierter Stahl ist insofern ein besonders geeignetes Material, als dass dieser herausragende Reflexionseigenschaften aufweist. Die zwei Metalllagen des Hitzeschildes weisen ferner üblicherweise eine Dicke von 0,15 bis 0,6 mm, bevorzugt 0,25 bis 0,4 mm auf. Die Dicken der beiden Metalllagen und des wenigstens eine Verstärkungseinsatzes müssen nicht zwangsläufig gleich sein, sondern können sich - wie schon die Materialien selbst - voneinander unterscheiden.

Die Form des Verstärkungseinsatzes hängt im Wesentlichen von der Form der Stelle im Hitzeschild ab, an der der Verstärkungseinsatz zwischen den beiden metallischen Außenlagen angeordnet werden soll. Typischerweise ist auch der Verstärkungseinsatz flächig, also beispielsweise scheibenförmig, ausgebildet. Im Rahmen des Herstellungsprozesses des Hitzeschildes ist der Verstärkungseinsatz wie die Ausgangs-Metalllagen üblicherweise zunächst plan, kann dann aber im Rahmen eines Präge-/Biegeschrittes zur Verformung des Hitzeschildes dreidimensional verformt werden. Dies ist beispielsweise dann der Fall, wenn der Bereich des Hitzeschildes, in dem der Verstärkungseinsatz angeordnet ist, verformt wird. Dabei wird der Verstärkungseinsatz zweckmäßig zusammen mit den beiden metallischen Außenlagen verformt.

Zur Integration des Verstärkungseinsatzes in den Hitzeschild ist es erfindungsgemäß möglich, den wenigstens einen Verstärkungseinsatz in der Weise zwischen den zwei Metalllagen anzuordnen, dass dieser wenigstens zu einer Seite hin auf der Isolationsschicht aufliegt. Zu der gegenüberliegenden Seite des Verstärkungseinsatzes grenzt dieser bei dieser Ausführungsform dagegen vorzugsweise unmittelbar an die Innenoberfläche einer der zwei metallischen Außenlagen an. Liegt der Verstärkungseinsatz bei dieser Ausführungsform in einem Bereich mit einer dreidimensionalen Verformung, so grenzt der Verstärkungseinsatz bei dieser Ausführungsform ferner vorzugsweise unmittelbar an diejenige metallische Außenlage, die bei der Verformung stärker gedehnt wird. Auf diese Weise wird die stärker von Verformung betroffene Seite des Hitzeschilds besonders verstärkt und die an die gegenüberliegende Seite des Verstärkungseinsatzes angrenzende Isolationsschicht wird während des Verbiegens durch den Verstärkungseinsatz weniger leicht beschädigt, was ansonsten beispielsweise durch ein Hineindrücken des Verstärkungseinsatzes in die üblicherweise poröse und vergleichsweise instabile Isolationsschicht eher geschehen könnte. Die beschriebene erfindungsgemäße Ausführung des Hitzeschildes hat ferner den Vorteil, dass der Einsatz des erfindungsgemäßen Verstärkungseinsatzes keine besonderen Anpassungsmaßnahmen, beispielsweise des Herstellungsprozesses, von bisher hergestellten Hitzeschilden erfordert. Es ist vielmehr möglich, im Herstellungsprozess den Verstärkungseinsatz auf die Isolationsschicht einfach aufzulegen und auf diese Weise in die Sandwichstruktur des Hitzeschildes zu integrieren.

Um ein Verrutschen Verstärkungseinsatzes insbesondere während eines Prägeschrittes besonders sicher zu verhindern, ist es allerdings bevorzugt, die korrekte Positionierung des Verstärkungseinsatzes durch weitere Maßnahmen sicherzustellen und den Verstärkungseinsatz zumindest vorläufig zu fixieren. Eine solche Maßnahme ist beispielsweise ein Verclinchen oder Verkleben des Verstärkungseinsatzes mit der Isolationsschicht und/oder mit beispielsweise einer der zwei Metalllagen. Besonders elegant gelingt eine zuverlässige Positionierung des Verstärkungseinsatzes ferner dadurch, dass die Isolationsschicht eine Aussparung zur Aufnahme des Verstärkungseinsatzes aufweist. Die Aussparung ist zweckmäßig so ausgebildet, dass ihre Form und Größe dem Verstärkungseinsatz entsprechend gewählt werden, und zwar derart, dass letzterer im Wesentlichen passgenau in der Aussparung aufgenommen werden kann. Die Aussparung kann dabei so ausgebildet sein, dass sie durch die gesamte Dicke der Isolationsschicht hindurchgeht oder nur durch einen Teil der Isolationsschicht, sodass ein Bereich der Isolationsschicht mit verringerter Dicke erhalten bleibt.

Die Dicke der Isolationsschicht wird dabei durch den Minimalabstand der beiden flächigen Oberflächen (also die beiden Flächen mit der größten Oberfläche) der Isolationsschicht zueinander festgelegt. Eine über die gesamte Dicke der Isolationsschicht hindurchgehende Aussparung wird beispielsweise in die Isolationsschicht eingestanzt. Ein in der Dicke verdünnter Bereich in der Isolationsschicht kann beispielsweise im Herstellungsprozesse des erfindungsgemäßen Hitzeschildes beim Einbringen beziehungsweise Auftragen der Isolationsschicht auf eine der beiden Metalllagen erhalten werden. Alternativ oder ergänzend kann ein solcher verdünnter Bereich aber auch im Rahmen eines Verformungsschrittes des Hitzeschildes, beispielsweise durch Prägen etc., erhalten werden. Dabei kann der Verstärkungseinsatz in die Isolationsschicht hineingedrückt werden, so dass sich die Dicke der Isolationssicht in diesem Bereich verringert.

Vorzugsweise orientiert sich die flächige Ausbildung der Aussparung an der flächigen Form des Verstärkungselementes. Dazu ist die Aussparung in der Isolationsschicht beispielsweise in der Art ausgebildet, dass sich der Verstärkungseinsatz bezüglich seiner flächigen Kontur im Wesentlichen passgenau in die Isolationsschicht einfügt. Dabei ist für die Ausgestaltung der Aussparung zweckmäßig die Außenkontur des Verstärkungseinsatzes maßgeblich, die sich durch die Umrisslinie seiner flachen Seite definiert. Dabei muss die Anpassung der Kontur der Aussparung nicht zwangsläufig vollständig erfolgen. So wird der Effekt der Fixierung des Verstärkungseinsatzes in der Aussparung der Isolationsschicht im Allgemeinen bereits erreicht, wenn beispielsweise etwas mehr als 180° des Außenumfangs der Aussparung der Außenkontur des Verstärkungseinsatzes eng folgen, während der verbleibende Winkelbereich durchaus weiter entfernt von der Außenkontur des Verstärkungseinsatzes verlaufen kann, auch wenn dies nicht unbedingt bevorzugt ist. Es ist nicht erforderlich, dass der Verstärkungseinsatz die Aussparung vollflächig ausfüllt. Ausreichend ist vielmehr, dass der Verstärkungseinsatz bezüglich seiner flächigen Abmessungen vollständig in die Aussparung der Isolationsschicht eingelegt werden kann und zumindest teilweise mit seinen Außenkanten an den Rand der Aussparung in der Isolationsschicht in der Weise anstößt, dass ein Verrutschen des Verstärkungseinsatzes im Wesentlichen verhindert wird.

Bevorzugt erfolgt die Anpassung von Aussparung und Verstärkungseinsatz aneinander nicht nur bezüglich der flächigen Ausdehnung, sondern gleichzeitig auch bezüglich der Dicke. Dies kann durch Variation der Dicke des Verstärkungseinsatzes und/oder der Dicke der Aussparung geschehen. Dabei wird aus Gewichtsgründen üblicherweise nur so eine Dicke für den Verstärkungseinsatz gewählt, wie sie für die Verstärkung tatsächlich benötigt ist. Üblicherweise ist die Isolationsschicht dicker als die einzelnen Metalllagen. Deshalb ist der Verstärkungseinsatz üblicherweise dünner oder maximal gleich dick wie die Isolationsschicht. Die Dicke des Verstärkungseinsatzes beträgt dabei mindestens 40 % der Dicke der Isolationsschicht. Bei besonderen Anforderungen an die Verstärkungswirkung des Verstärkungseinsatzes kann dessen Dicke jedoch auch dicker als die Isolationsschicht sein, sie wird üblicherweise jedoch nicht mehr als 300 % der Dicke der Isolationsschicht betragen.

Andererseits können optische Aspekte die Gestaltung des Hitzeschildes dominieren. In diesem Zusammenhang kann es bevorzugt sein, dass durch das Einlegen des Verstärkungseinsatzes zwischen die Metalllagen keine oder nur eine sehr geringe Änderung (weniger als 10 %, bevorzugt weniger als 5 %, insbesondere weniger als 2 %) der Gesamtdicke des Hitzeschildes ergibt. Bei einer durch die Isolationsschicht vollständig hindurchgehenden Aussparung ist deshalb der Verstärkungseinsatz in so einem Fall genauso dick wie die benachbarte Isolationsschicht. So kann eine gleichmäßige Oberfläche der Einheit aus Verstärkungseinsatz und Isolationsschicht erhalten werden. Analog entspricht die Dicke des Verstärkungseinsatzes bei einer nur durch einen Teil der Isolationsschicht hindurchgehenden Aussparung zweckmäßig im Wesentlichen der Tiefe dieser Aussparung. Dann schließt der in die Isolationsschicht eingelegte Verstärkungseinsatz im Wesentlichen bündig mit der Oberfläche der Isolationsschicht ab. Auch diese Ausführungsform kann optisch vorteilhaft sein, da trotz des in die Isolationsschicht eingelegten Verstärkungseinsatzes eine gleichmäßige Oberfläche der Einheit aus Verstärkungseinsatz und Isolationsschicht erhalten wird.

In einer weiteren bevorzugten Ausführungsform liegt der Verstärkungseinsatz zumindest teilweise in einer Auswölbung, die in einer der Metalllagen des Hitzeschildes gebildet ist. Unter einer Auswölbung ist in diesem Zusammenhang eine räumliche Ausformung bzw. Ausstülpung der betreffenden Metalllage zu verstehen, die in ihrer Form zur Aufnahme wenigstens eines Teilbereichs des Verstärkungseinsatzes ausgebildet ist. In einer Schnittansicht durch die betroffene Metalllage hat die Auswölbung somit beispielsweise ein im Wesentlichen U-förmiges oder wannenartiges Profil beziehungsweise umfasst einen Bereich, der beispielsweise zur Außenseite des Hitzeschildes über die benachbarte Oberfläche der Metalllage nach außen vorspringt. Dabei kann die Auswölbung auf unterschiedliche Arten erhalten werden. So ist es beispielsweise möglich, die Auswölbung vor dem Zusammenlegen der Sandwichstruktur des Hitzeschildes vorab in die betreffende Metalllage einzuprägen. In diesem Ausführungsbeispiel dient die Auswölbung somit beispielsweise dazu, die Positionierung des Verstärkungselementes zu gewährleisten. Alternativ ist es auch möglich, dass die Auswölbung erst im Rahmen eines Verformungsschrittes erhalten wird, beispielsweise indem der Verstärkungseinsatz wie ein Prägestempel wirkt. Bei der dreidimensionalen Verformung der zunächst planen Sandwichstruktur aus Metalllagen und Isolationsschicht mit eingelegtem Verstärkungseinsatz wird die Kontur des Verstärkungseinsatzes zumindest teilweise in die nach außen aufgewölbte Oberfläche der äußeren Metalllage durchgeprägt. Dies kann beispielsweise zur visuellen Kontrolle verwendet werden, um festzustellen, ob der Verstärkungseinsatz in den Hitzeschild eingelegt worden ist und sich an seiner vorgesehenen Position befindet.

Besonders günstig ist es, den Verstärkungseinsatz in einem Verformungsbereich, in dem der Spannungsgradient aufgrund der dreidimensionalen Verformung des Gesamtteils besonders groß ist, im Hitzeschild anzuordnen. Ebenfalls günstig ist die Verstärkung im unversteiften Bereich in unmittelbarer Nachbarschaft zu einer Versteifungsrippe. Bei dieser Ausführungsform treten die vorteilhaften Effekte der Erfindung besonders deutlich hervor. Insbesondere die vorgenannten Bereiche eines Hitzeschildes sind besonders anfällig für Rissbildungen etc. Erfindungsgemäß ist es nun vorgesehen, diesen Bereich (bzw. diese Bereiche) mit dem Verstärkungseinsatz in der Weise zu unterfüttern bzw. zu verstärken, dass der durch die Wechselwirkung von Spannung im Bauteil und betriebsgedingter Vibration beanspruchte Bereich durch den Verstärkungseinsatz zusätzlich stabilisiert wird. Eine Ausführungsform des Verstärkungseinsatzes sieht dabei mindestens ein langgestrecktes, schmales - und im dreidimensional verformten Hitzeschild ebenfalls gebogenes - Metallband vor, das den gekrümmten Hitzeschild skelettartig in seiner Form hält und ggf. gleichzeitig auch noch einen oder mehrere Anbindepunkte aufweist. Die vorzugsweise flächige Ausbildung des Verstärkungseinsatzes erlaubt, dass der Hitzeschild seine schall- und hitzedämmenden Eigenschaften selbst dann beibehalten kann, wenn sich in der äußeren Metalllage Risse bilden sollten, da dieser Bereich durch das Verstärkungselement zusätzlich stabilisiert wird. Gleichzeitig werden durch die wesentlich kleinere Ausbildung des Verstärkungseinsatzes im Vergleich zu den beiden außen liegenden Metalllagen die hitze- und/oder schalldämmenden Eigenschaften, die maßgeblich auf die Isolationsschicht zurückzuführen sind, kaum beeinträchtigt, da die Gesamtausdehnung oder die Gesamtfläche der Isolationsschicht durch den Verstärkungseinsatz nur unwesentlich vermindert werden. Es ist daher auch ohne Weiteres möglich, gleich mehrere Verstärkungseinsätze an ausgewählten Stellen im Hitzeschild vorzusehen.

Bezüglich der Materialspannungen im Hitzeschild zählt aber auch der Randbereich des Hitzeschildes zu den besonders beanspruchten Bereichen. Entsprechend kann hier eine Rissbildung besonders häufig beobachtet werden. Dies ist insbesondere dann der Fall, wenn Falze im Randbereich vorhanden sind. Solche Falze dienen häufig dazu, den Hitzeschild zu seinen Seiten zu verschließen und eine Verbindung der einzelnen Lagen des sandwichartig aufgebauten Hitzeschildes zu erhalten. Bei derartigen Falzen wird der Hitzeschild, wie erwähnt, in der Weise dreidimensional verformt, dass die eine Metalllage mit ihrem Randbereich um den Randbereich der anderen Metalllage herum gebogen wird, so dass die gebogene Metalllage im Falzbereich einen U-förmigen Querschnitt aufweist. Alternativ ist es beispielsweise auch bekannt, dass beide Metalllagen zusammen im Randbereich umgebogen oder miteinander eingerollt werden und damit dreidimensional verformt werden. In diesem Randbereich sind die Metalllagen schon sehr stark gedehnt, wobei diese Dehnung sich durch die dreidimensionale Verformung des Hitzeschilds in manchen Randabschnitten noch extrem zunimmt. Hier treten Risse deshalb besonders häufig auf, weshalb sich die Verwendung eines Verstärkungseinsatzes an solchen Stellen besonders anbietet. Die vorteilhaften Effekte des erfindungsgemäßen Verstärkungseinsatzes können grundsätzlich bei sämtlichen aus dem Stand der Technik bekannten Falzen im Hitzeschildbereich beobachtet werden, sind allerdings nicht auf derartig gestaltete bzw. verformte Randbereiche beschränkt. Vielmehr weisen Hitzeschilde häufig auch, wie vorstehend bereits erwähnt, in ihrer Fläche Bereiche starker dreidimensionaler Verformung auf, um den Hitzeschild beispielsweise besonders platzsparend zum Beispiel in einem Motorraum anordnen zu können. Auch in solchen Bereichen steigt mit zunehmender dreidimensionaler Verformung und damit steigender Materialspannung das Risiko, dass Rissbildungen im Hitzeschild beobachtet werden. Ein solcher Bereich, in dem der Hitzeschild auf irgendeine Weise dreidimensional verformt ist (beispielsweise im Falzbereich oder in der Fläche des Hitzeschildes), wird im Folgenden allgemein als Verformungsbereich bezeichnet.

In einem solchen Verformungsbereich lassen sich mit dem erfindungsgemäßen Verstärkungseinsatz besonders gute Ergebnisse erzielen, da hier die zusätzliche Stabilisierung des Verformungsbereiches durch den erfindungsgemäßen Verstärkungseinsatz einer Rissbildung besonders effektiv entgegenwirkt. Dazu wird der Verstärkungseinsatz zweckmäßigerweise gezielt in dem betroffenen Verformungsbereich mit hoher Materialspannung und insbesondere in den gefalzten Randbereichen des Hitzeschildes angeordnet. Dazu kann der Verstärkungseinsatz in einer der vorstehend beschriebenen Weisen im Hitzeschild angebracht werden. Es ist allerdings nicht zwangsläufig notwendig, den Verformungsbereich vollständig mit einem Verstärkungseinsatz zu unterfüttern. Häufig ist es bereits ausreichend, den Verstärkungseinsatz in der Weise auszubilden bzw. im Hitzeschild anzuordnen, dass er nur teilweise in den Verformungsbereich und insbesondere in den Falzbereich hineinreicht. Es ist aber auch möglich, den Verstärkungseinsatz zumindest teilweise und insbesondere vollständig mit in die Falzverbindung zu integrieren. Dazu wird das Verstärkungselement zumindest mit einem Teilbereich im Falzprozess beispielsweise mit wenigstens einer der Metalllagen zum Erhalt der Falzverbindung gemeinsam umgebogen.

Die Befestigung des erfindungsgemäßen Hitzeschildes am Einsatzort, welcher beispielsweise der Motorraum eines Kraftfahrzeugs ist, ist grundsätzlich mit denen aus dem Stand der Technik bekannten Befestigungsmethoden möglich. Dazu ist es beispielsweise bekannt, Durchgangsöffnungen im Hitzeschild vorzusehen, durch die zur Befestigung des Hitzeschildes Befestigungsschrauben hindurchgeführt werden. Im Bereich dieser Durchgangsöffnungen wird der Hitzeschild besonders stark beansprucht, da an diesen Stellen beispielsweise Vibrationen aus dem Motorraum auf den Hitzeschild übertragen werden. Ferner werden diese Durchgangsöffnungen beispielsweise durch Stanzverfahren erhalten, sodass die Materialspannungen im Hitzeschild im Bereich der Durchgangsöffnungen bereits herstellungsbedingt vergleichsweise hoch sind. Im Rahmen der Erfindung hat es sich nun gezeigt, dass der erfindungsgemäße Verstärkungseinsatz speziell in einem Bereich mit einer Durchgangsöffnung der Rissbildung besonders gut entgegenwirkt. Bei dieser Ausführungsform eines erfindungsgemäßen Hitzeschildes, die eine durch alle Lagen des Hitzeschildes durchgehende Durchgangsöffnung umfasst, ist der Verstärkungseinsatz vorzugsweise in der Weise angeordnet, dass er die Durchgangsöffnung wenigstens teilweise und insbesondere vollständig umläuft. Der flächig ausgebildete und gegebenenfalls zumindest teilweise dreidimensional verformte Verstärkungseinsatz weist bei dieser Ausführungsform ferner ebenfalls eine Ausnehmung bzw., soweit er die Durchgangsöffnung vollständig umläuft, eine Durchgangsöffnung auf, die mit der Durchgangsöffnung im Hitzeschild korrespondiert. Der Verstärkungseinsatz versperrt somit nicht die Durchgangsöffnung, so dass eine Befestigungsschraube hinderungsfrei durch den Hitzeschild geführt werden kann. Darüber hinaus ermöglicht der Verstärkungseinsatz, dass, selbst wenn Risse in den Metalllagen im Bereich der Durchgangsöffnung auftreten, die Funktionsweise des Hitzeschildes bzw. die Befestigung des Hitzeschildes nicht negativ beeinflusst wird. Durch die Unterfütterung dieses unter Umständen Risse aufweisenden Bereichs ist vielmehr gewährleistet, dass die Schraubverbindung an sich den Hiteschild nach wie vor an seiner Position hält und die Risse nicht weiter wachsen. Auf diese Weise kann somit die Einsatzdauer des Hitzeschildes erheblich verlängert werden.

Es ist grundsätzlich möglich, den Verstärkungseinsatz einlagig auszubilden. Bei diesem Ausführungsbeispiel handelt es sich bei dem Verstärkungseinsatz somit um ein einteiliges Bauteil, welches in den Hitzeschild zwischen den zwei außenliegenden Metalllagen integriert ist. Alternativ kann der Verstärkungseinsatz aber auch mehrere Lagen und insbesondere zwei Lagen umfassen. Dabei müssen die mehreren Lagen nicht zwangsläufig gleichartig, beispielsweise hinsichtlich ihrer Form bzw. Kontur und Dicke, gestaltet sein, sondern können vielmehr auch voneinander abweichende Formen bzw. Konturen und Dicken aufweisen und auch aus verschiedenen Materialien bestehen. Durch eine mehrlagige Ausbildung des Verstärkungseinsatzes gelingt einerseits eine Einstellung der Dicke des Verstärkungseinsatzes, beispielsweise im Wesentlichen auf die Dicke der an den Verstärkungseinsatz angrenzenden Isolationsschicht, besonders einfach. Andererseits ist es möglich, durch eine gezielte Auswahl zueinander unterschiedlicher Lagen des Verstärkungseinsatzes die Eigenschaften des Verstärkungseinsatzes einzustellen, beispielsweise im Hinblick auf Biegeeigenschaften - was insbesondere im Rahmen eines Verformungsprozesses, dem auch der Verstärkungseinsatz zumindest teilweise unterworfen ist, wichtig ist - oder auch im Hinblick auf Stabilisierungseigenschaften. So ist es beispielsweise möglich, eine Lage des Verstärkungseinsatzes mit Ausnehmungen und/oder Freiräumen und/oder Perforationen zu gestalten, sodass Materialeinsparungen erreicht werden können und/oder das Biegeverhalten des Verstärkungseinsatzes optimiert werden kann. Dazu ist es nicht erforderlich für jeden Hitzeschild einen separaten Verstärkungseinsatz vorrätig zu halten. Vielmehr kann durch eine entsprechende Anpassung und Kombination der einzelnen Lagen des Verstärkungseinsatzes eine Abstimmung auf die erforderliche Dicke und/oder eine gezielte Optimierung des Biege- und/oder Verformungsverhaltens des Verstärkungseinsatzes für verschiedene Anwendungen erhalten werden.

Sollte die Verstärkungsaufgabe einen mehrlagigen metallischen Verstärkungseinsatz erfordern, gleichzeitig aus Gewichtsgründen aber der Verstärkungseinsatz so kompakt wie möglich gehalten werden, kann ein mehrlagiger metallische Verstärkungseinsatz vorteilhaft sein, der in wenigstens einer seiner Lagen wenigstens eine Materialaussparung aufweist. Unter einer Materialaussparung ist dabei sowohl eine Durchgangsöffnung im Inneren des Verstärkungseinsatzes zu verstehen als auch eine Ausnehmung am Außenrand. Bei entsprechender Gestaltung der Materialaussparungen kann beispielsweise ein Verstärkungseinsatz erhalten werden, der gestreckte und verhältnismäßig schmale Teilbereiche umfasst, die im Hitzeschild beispielsweise in räumlich besonders beengte Regionen des Hitzeschildes hineinreichen und diese stabilisieren. Beispielhaft seien Einsätze mit zungen- oder spitzenartigen Vorsprüngen genannt, zum Beispiel sternförmig gebildete Verstärkungseinsätze oder einzelne Lagen derselben. Neben der erreichbaren Gewichtsreduktion erlaubt die Integration einer Materialaussparung in wenigstens einer Lage eines mehrlagigen Verstärkungseinsatzes beispielsweise auch eine Modifikation bzw. Anpassung der Biegeeigenschaften des Verstärkungseinsatzes. Dieser vorteilhafte Effekt tritt ganz besonders deutlich dann hervor, wenn der metallische Verstärkungseinsatz in einem Bereich des Hitzeschildes angeordnet ist, der besonders große Spannungen aufweist. Werden Materialaussparungen, insbesondere im Randbereich des metallischen Verstärkungseinsatzes, verwendet, ist es möglich, einen Verstärkungseinsatz zu erhalten, der sich in diesem Bereich leichter verbiegen lässt. Der Gegendruck, den das Verstärkungselement beispielsweise in einem Prägeschritt auf eine der zwei Metalllagen ausübt, wird somit reduziert, sodass im Ergebnis Rissbildungen weiter vermindert werden können.

Die Größe des Verstärkungseinsatzes richtet sich insbesondere nach seiner Verstärkungsaufgabe, aber auch nach den geometrischen Gegebenheiten im Hitzeschild. Stern- oder kreisförmige Verstärkungseinsätze weisen einen maximalen Durchmesser von 2,5 bis 6 cm, insbesondere 4 bis 5,5 cm auf. Ovale Verstärkungseinsätze werden in ihrer größeren Ausdehnungsrichtung 3 bis 7 cm, bevorzugt 4,5 bis 6 cm und in ihrer geringeren Ausdehnungsrichtung 1,5 bis 5 cm, bevorzugt 2 bis 4 cm aufweisen. Streifenförmige Verstärkungseinsätze haben eine Breite zwischen 1,5 und 3 cm, wobei die Breite, z.B. im Bereich von Durchgangsöffnungen, lokal auch variieren kann.

Die Herstellung des Verstärkungseinsatzes ist grundsätzlich durch die üblichen Verfahren möglich. Diese umfassen beispielsweise das Ausstanzen des Verstärkungseinsatzes aus einer planen und flächigen Ausgangsform. Dadurch, dass der Verstärkungseinsatz im Vergleich zu den zwei Metalllagen des Hitzeschildes in seiner Ausdehnung wesentlich geringer ist, ist es zudem möglich, die aus der Herstellung der zwei Metalllagen anfallenden Stanzreste zur Herstellung des Verstärkungseinsatzes heranzuziehen. Die im Herstellungsprozess anfallenden Stanzreste können somit weiter verwendet werden, sodass der bei der Produktion eines erfindungsgemäßen Hitzeschildes auflaufende Materialausschuss verringert werden beziehungsweise bisherige Abfälle, wie beispielsweise Stanzreste, dem Produktionsprozess wieder zugeführt werden können. Die Erfindung zeichnet sich somit auch durch Vorteile in ökologischer Hinsicht aus. Es können auch Stanzreste aus anderen Bauteilen verwendet werden, insbesondere wenn damit eine optimierte Materialkombination für den gewählten Einsatzzweck erhalten wird.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen.

In den Figuren zeigen schematisch:
- Fig. 1: eine Ausschnittsdraufsicht auf einen erfindungsgemäßen Hitzeschild mit einem Verstärkungseinsatz in einer ersten Ausführungsform;
- Fig. 2: eine Draufsicht auf eine zweite Ausführungsform des Verstärkungseinsatzes;
- Fig. 3: eine Draufsicht auf eine dritte Ausführungsform eines Verstärkungseinsatzes;
- Fig. 4: eine Draufsicht auf eine vierte Ausführungsform eines Verstärkungseinsatzes;
- Fig. 5: eine Draufsicht auf eine fünfte Ausführungsform eines Verstärkungseinsatzes;
- Fig. 6a: eine Querschnittsansicht des Hitzeschildes aus Figur 1 entlang der Linie I in Figur 1;

- Fig. 6b: eine Querschnittsansicht des Hitzeschildes aus Figur 1 entlang der Linie II aus Figur 1;
- Fig. 6c: eine Ausschnittsvergrößerung der Ausschnitte A und B aus Figur 6b;
- Fig. 7: eine Ausschnittsdraufsicht auf einen erfindungsgemäßen Hitzeschild mit einem Verstärkungseinsatz in einer zweiten Ausführungsform;
- Fig. 8a: eine Ausschnittsdraufsicht auf einen erfindungsgemäßen Hitzeschild mit einem Verstärkungseinsatz in einer dritten Ausführungsform;
- Fig. 8b: eine Querschnittsansicht des Hitzeschilds aus Fig. 8a entlang der Linie A-A aus Figur 8a;
- Fig. 9a: eine Ausschnittsdraufsicht auf einen erfindungsgemäßen Hitzeschild mit einem Verstärkungseinsatz in einer vierten Ausführungsform und
- Fig. 9b: eine Querschnittsansicht des Hitzeschildes aus Figur 9a entlang der Linie B-B aus Figur 9a.

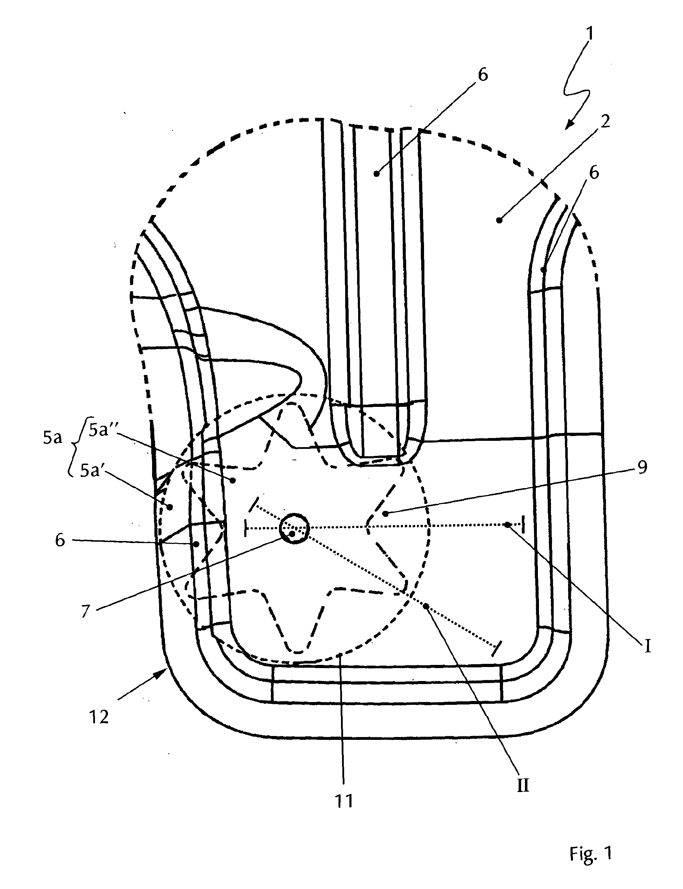

Fig. 1 zeigt einen Teilbereich eines erfindungsgemäßen Hitzeschildes 1, wobei sich der Hitzeschild 1 entlang der gestrichelten Außenlinie weiter fortsetzt. Der Hitzeschild 1 wird zur sichtbaren Oberseite hin von einer Metalllage 2 abgeschlossen. Der Hitzeschild ist ferner dreidimensional verformt und weist mehrere Verformungsbereiche 6 auf, die in Fig. 1 nur beispielhaft angegeben sind. In diesen Verformungsbereichen 6 weist der Hitzeschild 1 eine besonders stark verformte dreidimensionale Struktur auf. In Figur 1 ist ferner ein zweilagiger Verstärkungseinsatz 5a (gestrichelt dargestellt) angeordnet, der sich unterhalb der Metalllage 2 befindet und bis in einen Randbereich 12 des Hitzeschilds 1 reicht. Der Verstärkungseinsatz 5a besteht aus den zwei scheibenartigen Elementen 5a' und 5a", wobei das Element 5a' eine sechsstrahlige sternförmige Kontur und das Element 5a" eine kreisrunde Kontur aufweist. Beide Elemente 5a' und 5a" sind flächig ausgebildet und übereinander liegend angeordnet.

Der Hitzeschild 1 weist ferner eine Durchgangsöffnung 7 auf, die zu Befestigungszwecken am Hitzeschild angeordnet ist. Die Durchgangsöffnung 7 durchläuft den Hitzeschild inklusive der Metalllage 2 und den beiden übereinander liegenden Elementen 5a' und 5a" des Verstärkungseinsatzes 5a vollständig. Durch diese Durchgangsöffnung 7 kann eine Befestigungsschraube (nicht dargestellt) zur Befestigung des Hitzeschildes in beispielsweise einem Motorraum hindurchgeführt werden. Das Verstärkungselement 5a ist in Fig. 1 in dem links unten liegenden Randbereich des Hitzeschildes 1 angeordnet und erstreckt sich mit seinem linken Bereich und mit einem schräg rechts oben liegenden Bereich zur Stabilisierung dieser Bereiche in jeweils einen der Verformungsbereiche 6.

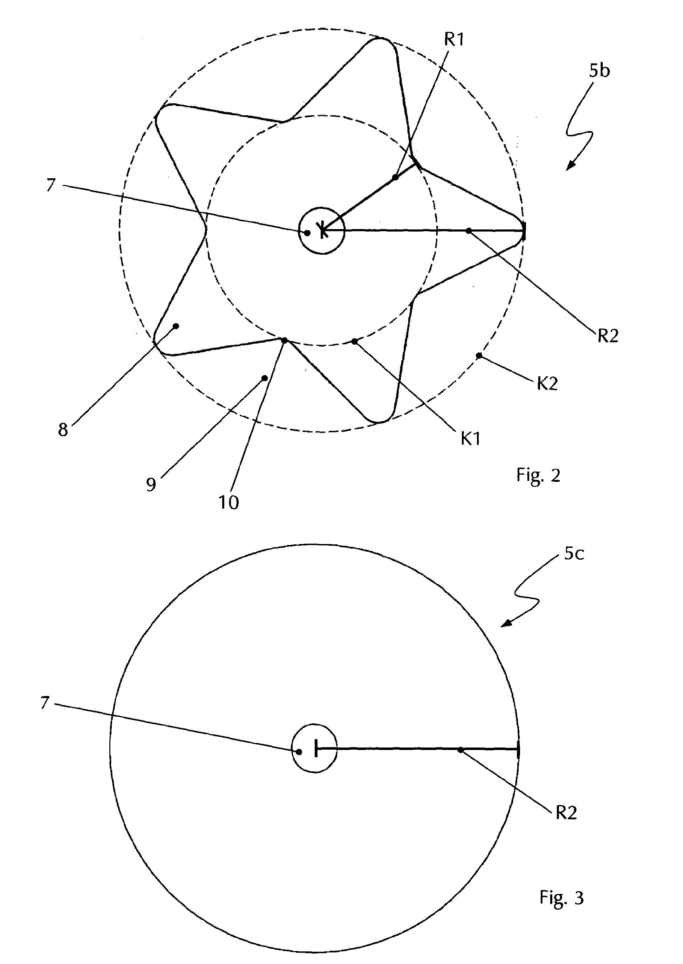

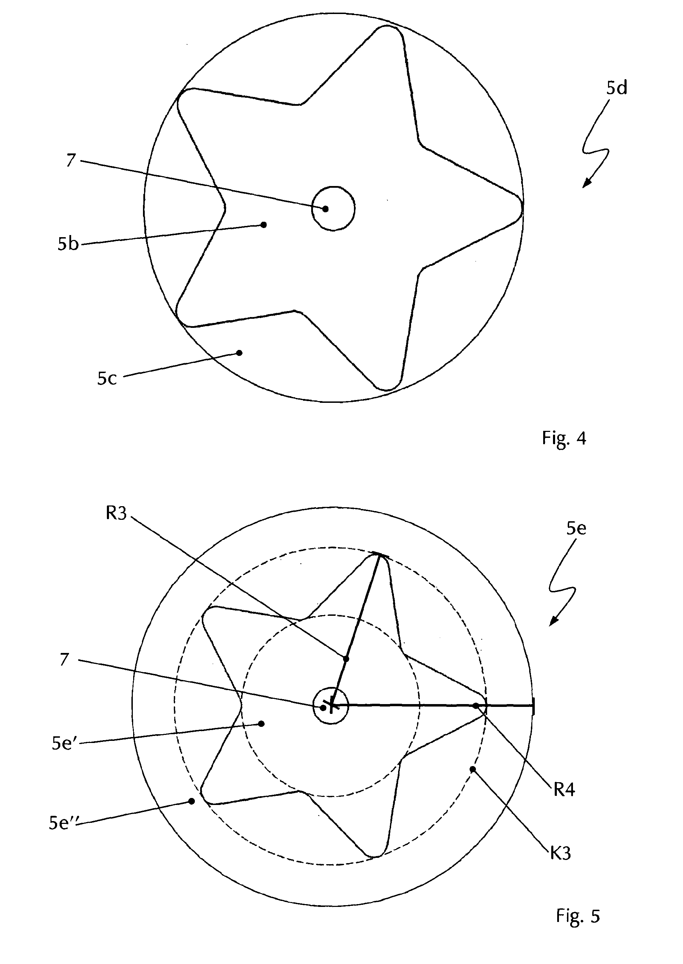

Die Figuren 2 bis 5 geben weitere beispielhafte Ausführungsformen des Verstärkungseinsatzes an. Die Verstärkungseinsätze in den Figuren 2 bis 5 sind dabei in der Form dargestellt, in der sie in den Hitzeschild 1 im Herstellungsprozess vor einer dreidimensionalen Verformung eingelegt werden. Die Verstärkungseinsätze der Figuren 2 bis 5 sind allesamt ebenfalls im Wesentlichen plan ausgebildet und zum Teil einlagig (Figuren 2 und 3), zum Teil zweilagig (Figuren 4 und 5) ausgebildet.

Gemäß Fig. 2 ist der Verstärkungseinsatz 5b sternförmig ausgebildet und weist zwischen den beiden Kreisbahnen K1 und K2 zwischen den fünf Zacken 8 jeweils eine keilförmige Materialaussparung 9 auf. Die sternförmige Kontur des Verstärkungseinsatzes 5b wird einerseits durch einen auf den Mittelpunkt der Durchgangsöffnung 7 bezogenen Radius R1 festgelegt, der die Kreisbahn K1 definiert, auf die die zwischen den einzelnen Zacken 8 liegenden Zackenfußpunkte 10 der Außenkante des Verstärkungselementes 5b liegen. Der im Verhältnis zum Radius R1 größere Radius R2 legt dagegen die Kreisbahn K2 fest, auf der die Spitzenpunkte der Zacken 8 liegen. Die Kreisbahn K1 des Radius R1 und K2 des Radius R2 sind jeweils gestrichelt in Fig. 1 angegeben.

Die weitere Ausführungsform 5c eines Verstärkungseinsatzes ist in Figur 3 wiedergeben. Beim gezeigten Ausführungsbeispiel handelt es sich um eine kreisrunde Scheibe, die ebenfalls eine zentrale Durchgangsöffnung 7 und einen Radius R2 aufweist.

Die Verstärkungseinsätze 5b und 5c der Figuren 2 und 3 können grundsätzlich allein in dem Hitzeschild 1 zur Verstärkung beispielsweise rissanfälliger Bereiche eingesetzt werden. Es ist allerdings auch möglich, mehrere Elemente zum Erhalt eines Verstärkungseinsatzes zu kombinieren, wie dies aus dem Verstärkungseinsatz 5a der Fig. 1 bereits hervorgeht. Beim Verstärkungseinsatz der Fig. 4 wurden in analoger Weise die beiden Verstärkungseinsätze 5b und 5c aufeinander gelegt und bilden in ihrer Gesamtheit einen weiteren zweilagigen Verstärkungseinsatz 5d. Dabei sind beide Elemente 5b und 5c des Verstärkungseinsatzes 5d in der Weise aufeinander liegend angeordnet, dass die Durchgangsöffnung 7 beide Lagen des Verstärkungselementes 5d durchläuft. Darüber hinaus liegen die Spitzenpunkte der Zacken des sternförmigen Elementes 5b im Wesentlichen auf der Außenkante des kreisrunden Elementes 5c.

Gemäß Fig. 5 ist es allerdings auch möglich, einen mehrlagigen Verstärkungseinsatz 5e zu verwenden, bei dem das eine Element 5e" des Verstärkungseinsatzes 5e zu den Seiten des anderen Elementes 5e' übersteht. Dies wird in Fig. 5 durch den Vergleich der Kreisbahn K3 (gestrichelt dargestellt) mit dem Radius R3, auf der die Spitzenpunkte des sternförmigen Elementes 5e' liegen, mit der kreisrunden Außenumfang mit dem Radius R4 des scheibenförmigen Elementes 5e" verdeutlicht.
Der Außenradius R3 des Elementes 5e' des Verstärkungseinsatzes 5e ist deutlich kleiner als der Radius R4 des Elementes 5e". Allerdings sind selbstverständlich auch hier die beiden Elemente 5e' und 5e" in der Weise zueinander angeordnet, dass die Durchgangsöffnung 7 durch beide Elemente 5e' und 5e" hindurch läuft.

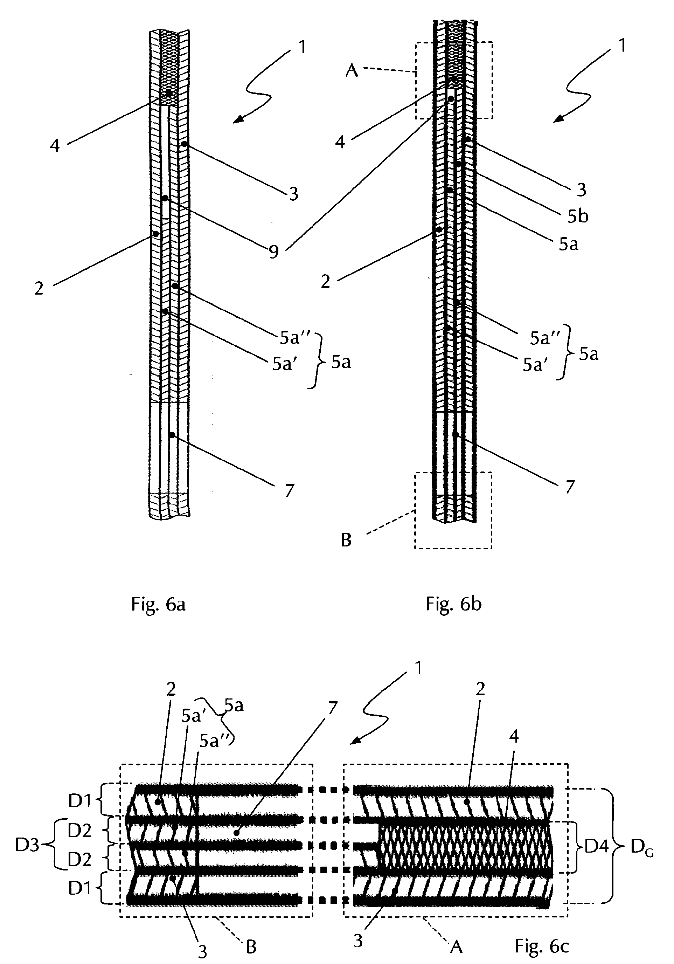

Die Figuren 6a, 6b und 6c veranschaulichen den Aufbau des Hitzeschildes 1 aus Fig. 1 in einer Schnittansicht. Figur 6a ist dabei eine Schnittansicht entlang der Linie I aus Fig. 1, und Fig. 6b ist eine Schnittansicht entlang der Linie II aus Figur 1. Gemäß den Figuren 6a und 6b ist der Hitzeschild sandwichartig aufgebaut. Zwischen der Metalllage 2 und einer Metalllage 3 ist eine Isolationsschicht 4 angeordnet. Die Isolationsschicht 4 erstreckt sich jedoch nicht unmittelbar bis an den Rand der Durchgangsöffnung 7. Es ist vielmehr eine Aussparung 11 in der Isolationsschicht 4 vorhanden, in die der Verstärkungseinsatz 5a, der aus den beiden Elementen 5a' und 5a" besteht, eingesetzt ist (in Fig. 1 innerhalb der gestrichelten Kreislinie 11). Die Elemente 5a' und 5a" sind aufeinander liegend angeordnet und zwischen den beiden Metalllagen 2 und 3 im Hitzeschild 1 untergebracht. Die Elemente 5a' und 5a" werden gemeinsam mit den beiden Metalllagen 2 und 3 von der Durchgangsöffnung 7 vollständig durchlaufen.

Die Schnittlinie I schneidet eine Materialaussparung 9 im Element 5a", sodass in der Sandwichstruktur gemäß der Figur 6a ein der Materialaussparung entsprechender Freiraum erhalten wird. Entlang der Schnittlinie II, die entlang eines Strahls (Figur 2) des Verstärkungseinsatzes 5a' ist dieser Freiraum wesentlich kleiner, da die Materialaussparung 9 hier ein Minimum aufweist (Fig. 6b). In beiden Fällen schließt sich eine Lage bzw. Element 5a" des Verstärkungseinsatzes 5a im Wesentlichen bündig und passgenau an die Isolationsschicht 4 an.

Fig. 6c schließlich ist eine Ausschnittsvergrößerung gemäß der mit den gestrichelten Kästen angegebenen Bereiche A und B aus Fig. 6b. Im vorliegenden Ausführungsbeispiel weisen die beiden Metalllagen 2 und 3 die Dicke D1 auf und sind somit gleich dick. Die ebenfalls zueinander gleich dicken Elemente 5a' und 5a" des Verstärkungseinsatzes 5a haben eine Einzeldicke D2 und eine Gesamtdicke D3. Die Isolationsschicht 4 hat eine Dicke D4, die im Wesentlichen der Gesamtdicke D3 des Verstärkungseinsatzes 5a entspricht. Dies führt dazu, dass die Gesamtdicke D_{G} des Hitzeschildes 1 im gezeigten Bereich der Isolationsschicht 4 und in dem an die Isolationsschicht 4 angrenzenden Bereich mit dem Verstärkungseinsatz 5a (umfassend die Elemente 5a' und 5a") im Wesentlichen konstant ist und sich auch durch Verwendung des Verstärkungseinsatzes 5a nicht ändert.

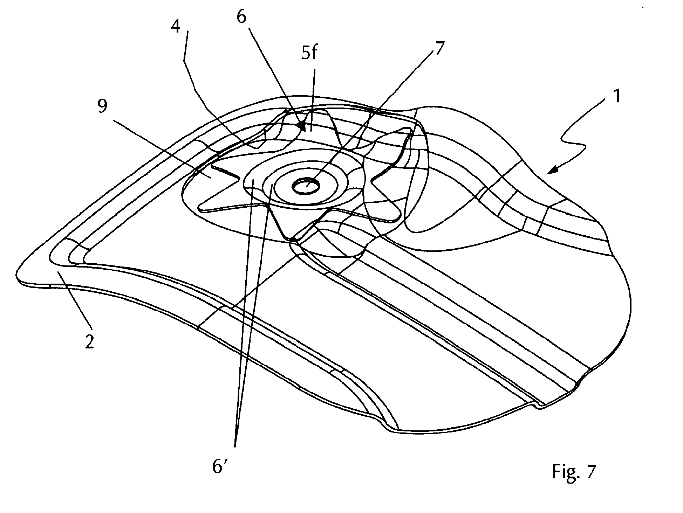

Der Hitzeschild 1 in Figur 7 stellt eine Variante zum Hitzeschild der Figur 1 dar. Wiederum verstärkt ein Verstärkungselement 5f die Durchgangsöffnung 7 und reicht dabei bis in den Verformungsbereich 6 in der Nähe des Außenrandes des Hitzeschildes 1. Hier ist nun aber auch der unmittelbar an die Durchgangsöffnung 7 angrenzende Bereich 6' des Verstärkungselements 5f gekrümmt, die Ebene der Durchgangsöffnung 7 ist gegenüber den angrenzenden Bereichen abgesenkt. Wiederum weist das Verstärkungselement 7 eine Sternform auf, ist nun aber einlagig ausgeführt. Die Isolationsschicht 4 ist relativ zum Außenrand des Verstärkungselements 5f großflächiger ausgespart, so dass eine Freimachung 9 zwischen der Isolationsschicht 4 und dem Verstärkungselement 5 besteht.

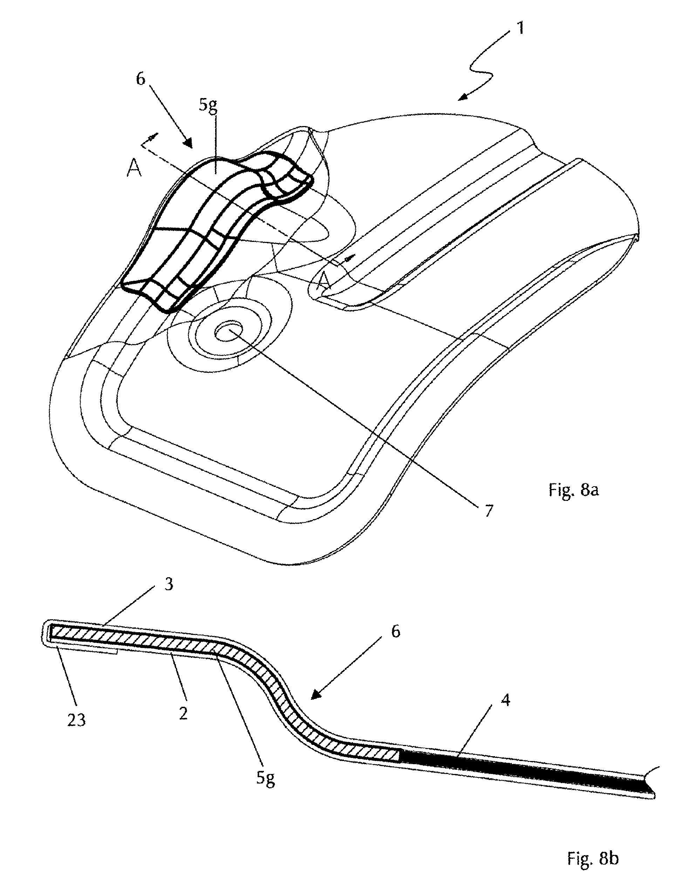

Figur 8a stellt einen Hitzeschild 1 dar, der nicht im Bereich der Durchgangsöffnung 7, sondern ausschließlich an einem Abschnitt der Außenkante, der besonders starken Spannungen ausgesetzt ist, mit einem Einsatz 5g verstärkt. Die Aufwölbung 6 des Außenrandes des Hitzeschildes in diesem Bereich dient im eingebauten Zustand beispielsweise zur Unterbringung eines auskragenden Elements, z.B. eines Rohrs. Das Verstärkungselement 5g ist hier annähernd rechteckig und ist - ohne selbst umgefalzt zu sein - zwischen die beiden Metalllagen 2, 3 eingelegt. Figur 8b zeigt, wie die Metalllage 3 an der Außenkante in Form eines Bördels 23 um den Rand der anderen Metalllage 2 greift und dabei das Verstärkungselement 5g mit umfasst. Die Metalllage 2 und das Verstärkungselement 5g schließen an ihrem Außenrand - zumindest annähernd - bündig ab, an den übrigen Rändern des Verstärkungselements 5g schließt sich - zumindest abschnittsweise - bündig die Isolationsschicht 4, hier eine mit hochtemperaturfesten Fasern verstärkte Pappe, an. Die Aufwölbung, ebenso wie die sonstige dreidimensionale Verformung des Hitzeschildes erfolgt erst nach dem Verbinden der Lagen, so dass auch das Verstärkungselement 5g bei der dreidimensionalen Verformung mit verformt wird.

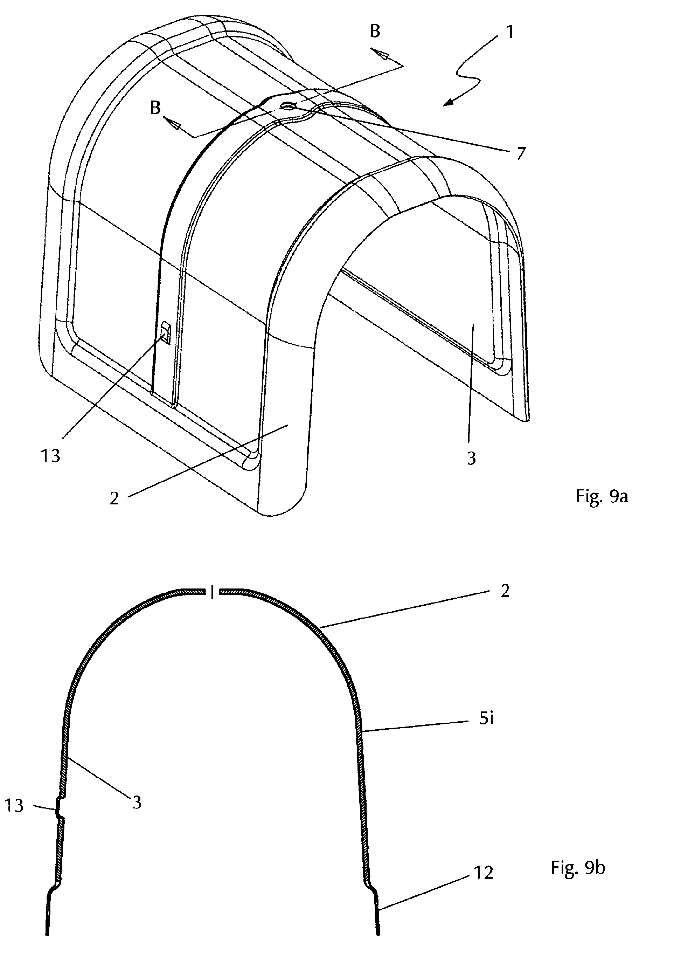

Figur 9a zeigt einen sattelförmigen Hitzeschild 1, der ungefähr auf halber Breite ein Verstärkungselement 5i aufweist, das in einer Ausnehmung der Isolationsschicht 4 zwischen den beiden Metalllagen 2, 3 eingefügt ist. Das Verstärkungselement 5i ist aus einem schmalen Metallstreifen gebildet, der in seiner Längsrichtung der Sattelform des Hitzeschilds folgt. Es überspannt in seiner Länge mehr als 80 % des Verlaufs des Hitzeschilds, nimmt in seiner Breite aber auch nur ca. 10 % der Breite des Hitzeschilds ein. Das Verstärkungselement 5i ist über einen Clinchpunkt 13 mit den beiden Metalllagen 2, 3 verbunden. Der Hitzeschild 1 weist eine Durchgangsöffnung 7 auf, die auch durch das Verstärkungselement 5i hindurchgeht. Im Bereich der Durchgangsöffnung 7 teilt sich das Verstärkungselement, die beiden Teilstücke laufen mit annähernd konstanter Breite um die Durchgangsöffnung und vereinigen sich dann wieder. Aus Figur 9b wird deutlich, dass der Hitzeschild im unteren Bereich 12 keine Isolationsschicht aufweist. Im gezeigten Beispiel ist der gesamte Außenrand des Hitzeschildes ohne Isolationsschicht ausgeführt. Aus Figur 9a wird auch deutlich, dass das Verstärkungselement 5i eine größere Dicke aufweist als die es umgebende Isolationsschicht, weswegen sich das Verstärkungselement ähnlich einer Rippe an der Oberfläche des Hitzeschildes 1 abzeichnet. Durch seine größere Materialstärke ist das Verstärkungselement hier in der Lage, auch bei starken Vibrationen ein unzulässig großes Auf- und Zuschwingen der Sattelform des Hitzeschildes zu vermeiden und damit der Rissbildung vorzubeugen.

## Patentansprüche

1. Hitzeschild (1) zum Abschirmen eines Gegenstandes gegen Hitze und/oder Schall mit zwei Metalllagen (2, 3) und mit einer zumindest abschnittsweise zwischen den zwei Metalllagen (2, 3) angeordneten nichtmetallischen Isolationsschicht (4),
**dadurch gekennzeichnet,**
**dass** wenigstens ein metallischer Verstärkungseinsatz (5a, 5b, 5c, 5d, 5e, 5f, 5g, 5i) zwischen den zwei Metalllagen (2, 3) angeordnet ist, wobei der wenigstens eine metallische Verstärkungseinsatz (5a, 5b, 5c, 5d, 5e, 5f, 5g, 5i) eine wesentlich geringere Ausdehnung aufweist als die zwei Metalllagen (2, 3).

2. Hitzeschild (1) nach Anspruch 1,
**dadurch gekennzeichnet,**
**dass** der wenigstens eine metallische Verstärkungseinsatz (5a, 5b, 5c, 5d, 5e, 5f, 5g, 5i) in einer Aussparung (11), insbesondere einer für den Verstärkungseinsatz passgenauen Aussparung, der nichtmetallischen Isolationsschicht (4) angeordnet ist.

3. Hitzeschild (1) nach Anspruch 2,
**dadurch gekennzeichnet,**
**dass** die Aussparung (11) durch die gesamte Dicke (D4) der Isolationsschicht (4) hindurchgeht.

4. Hitzeschild (1) nach Anspruch 3,
**dadurch gekennzeichnet,**
**dass** die Dicke (D3) des wenigstens einen metallischen Verstärkungseinsatzes (5a, 5b, 5c, 5d, 5e) im Wesentlichen der Dicke (D4) der an den wenigstens einen metallischen Verstärkungseinsatz (5a, 5b, 5c, 5d, 5e, 5f, 5g, 5i) angrenzenden Isolationsschicht (4) entspricht oder dünner ist.

5. Hitzeschild (1) nach Anspruch 2,
**dadurch gekennzeichnet,**
**dass** die Aussparung (11) nur durch einen Teil der Dicke (D4) der Isolationsschicht (4) hindurchgeht.

6. Hitzeschild (1) nach Anspruch 5,
**dadurch gekennzeichnet,**
**dass** die Dicke (D3) des wenigstens einen metallischen Verstärkungseinsatzes (5a, 5b, 5c, 5d, 5e, 5f, 5g, 5i) im Wesentlichen der Tiefe der Aussparung (11) in der Isolationsschicht (4) entspricht.

7. Hitzeschild (1) nach einem der vorhergehenden Ansprüche,
**dadurch gekennzeichnet,**
**dass** der wenigstens eine metallische Verstärkungseinsatz (5a, 5b, 5c, 5d, 5e, 5f, 5g, 5i) in einem Verformungsbereich (6), in dem der Hitzeschild (1) dreidimensional verformt ist, angeordnet ist.

8. Hitzeschild (1) nach Anspruch 7,
**dadurch gekennzeichnet,**
**dass** der Verformungsbereich (6) ein Randbereich (12) des Hitzeschildes (1) und insbesondere ein gefalzter Randbereich des Hitzeschildes (1) ist.

9. Hitzeschild (1) nach einem der vorhergehenden Ansprüche,
**dadurch gekennzeichnet,**
**dass** eine durch alle Lagen des Hitzeschildes (1) durchgehende Durchgangsöffnung (7) vorhanden ist, wobei der wenigstens eine metallische Verstärkungseinsatz (5a, 5b, 5c, 5d, 5e, 5f, 5g, 5i) die Durchgangsöffnung (7) wenigstens teilweise und insbesondere vollständig umläuft.

10. Hitzeschild (1) nach einem der vorhergehenden Ansprüche,
**dadurch gekennzeichnet,**
**dass** der wenigstens eine metallische Verstärkungseinsatz (5a, 5d, 5e) mehrlagig und insbesondere zweilagig ausgebildet ist.

11. Hitzeschild (1) nach Anspruch 10,
**dadurch gekennzeichnet,**
**dass** wenigstens eine Lage des wenigstens einen mehrlagigen metallischen Verstärkungseinsatzes (5a, 5d, 5e) wenigstens eine Materialaussparung (9), insbesondere eine Randaussparung, aufweist.

12. Hitzeschild (1) nach einem der vorhergehenden Ansprüche,
**dadurch gekennzeichnet,**
**dass** wenigstens eine der zwei Metalllagen (2, 3) eine Auswölbung aufweist, die wenigstens teilweise in einem Verformungsbereich (6) des Hitzeschildes (1) angeordnet ist, wobei das wenigstens eine metallische Verstärkungselement (5a, 5b, 5c, 5d, 5e, 5f, 5g, 5i) zumindest teilweise in der Auswölbung liegt.
